# EUROPEAN PATENT SPECIFICATION

(11) **EP 3 246 073 B1**
(45) Date of publication and mention of the grant of the patent: **13.05.2020**
(21) Application number: 16187149.6
(22) Date of filing: 02.09.2016
(51) Int. Cl.: A63B 21/005, A63B 22/02

(54) **EXERCISE TREADMILL CAPABLE OF GENERATING ELECTRICAL POWER**
TRAININGSLAUFBAND ZUR ERZEUGUNG ELEKTRISCHER ENERGIE
TAPIS ROULANT D'EXERCICE POUVANT GÉNÉRER DE L'ÉNERGIE ÉLECTRIQUE

(30) Priority: 20.05.2016 TW 105115807
(43) Date of publication of application: 22.11.2017
(73) Proprietor: SportsArt Industrial Co., Ltd., Tainan City (TW)
(72) Inventor: Kuo, Hai-Pin, Tainan City (TW)
(74) Representative: Lang, Christian

(56) References cited:
- WO-A1-2013/138375
- WO-A1-2015/116851
- WO-A2-2014/160057
- FR-A1- 2 287 248
- GB-A- 2 152 825
- US-A- 6 042 514
- US-A1- 2003 130 095
- US-A1- 2016 023 039
- US-B1- 6 231 482

## Description

### (a) Technical Field of the Invention

The present invention relates to an exercise treadmill capable of generating electrical power and, more particularly, to an exercise treadmill which employs the treading force provided by a user to accelerate a running belt to facilitate generation of electrical power.

### (b) Description of the Prior Art

Today, many busy office workers are unable to exercise outdoors due to lack of time, and this may lead to poor health or insufficient physical strength. Thus, various exercise machines, which may be large or small, have been developed for allowing persons to exercise indoors without having to go outdoors. According to the functions provided by an exercise machine, various parts of a human body can be trained properly and adequately. For example, an exercise bike allows users to train their feet through riding action; an exercise treadmill allows users to train their feet through walking or running. For meeting operational or functional requirements, an exercise machine can be provided with various electrical devices, such as a motor for driving a belt at different speeds, or a display panel which allows a user to be aware of information of the exercising activity. For such exercise machines installed with electrical devices, electrical power is indispensible. For large-scale exercise machines, the electricity can be supplied from city power. For small-scale exercise machines, batteries can supply necessary electricity. Since a training activity involved in an exercise machine can produce a certain amount of kinetic energy, it is a pity that the energy is not utilized. Thus, there is a need to develop an exercise machine, especially an exercise treadmill, which can make use of kinetic energy generated in it through a training activity to generate necessary electrical power for the machine.

Patent application publication WO 2015/116851 A1 discloses a treadmill having a fly wheel that is driven by one of the rollers carrying a tread belt. The fly wheel serves for providing inertia to maintain movement of the tread belt. The rotation of the fly wheel can also induce eddy currents, thereby generating electrical power which can be fed to a console of the treadmill.

### SUMMARY OF THE INVENTION

The present invention provides an exercise treadmill having the features of claim 1. Further embodiments are subject-matter of the dependent claims. The treadmill according to the invention comprises a machine body, which includes at least two rollers, a flywheel linked with one of the two rollers, a support assembly mounted between the two rollers, and a running belt fitted around and engaged with the two rollers and arranged around the support assembly. The exercise treadmill is provided with an accelerating means so that, while a user is walking or running on the machine body, the treading force provided by the user allows the running belt to be accelerated to facilitate generation of electrical power.

According to one feature of the present invention, the running belt is provided on its outer surface with a plurality of elongated aluminum plates, which allows a user to tread thereon to facilitate the running belt moving around the two rollers for generating electrical power. In addition to improving body health, the electrical power produced by the treadmill in a training activity can reduce the electrical consumption of city power.

According to another feature of the present invention, each of the elongated aluminium plates is installed at each of its two opposite ends with two small rollers, which are in rolling contact with the support assembly, so as to reduce the friction between the elongated aluminum plates and the support assembly. In use, while a user is walking or running on the running belt overlaid with the elongated aluminum plates, due to the small roller installed at the elongated aluminum plates being in rolling contact with the support assembly, the friction between the elongated aluminum plates and the support assembly can be significantly reduced, so that the running belt can be accelerated to move around the two rollers more easily. Furthermore, due to an inclination angle between a bottom of the main frame of the machine body and a floor, while a user is walking or running on the treadmill, the user's weight can be applied to the running belt to facilitate the running belt moving around the two rollers, so that the flywheel can be rotated more easily to generate electrical power. Therefore, the user can exercise on the machine more easily, improve body health, and reduce the electrical consumption of city power.

Other objects, advantages, and novel features of the present invention will become more apparent from the following detailed description when taken in conjunction with the accompanying drawings.

### BRIEF DESCRIPTION OF THE DRAWINGS

FIG 1 shows a 3-dimensional view of an exercise treadmill according one embodiment of the present invention.
FIG 2 shows an exploded view of the exercise treadmill.
FIG 3 shows a partially exploded view of a running belt used in the exercise treadmill, wherein the running belt is overlaid with a plurality of elongated aluminum plates.
FIG 4 shows a fragmentary, enlarged, exploded view of the running belt together with the elongated aluminum plates.
FIG 5 shows an exploded view of one of the elongated aluminum plates, wherein the elongated aluminum plate is provided with small roller.
FIG 6 show a side elevation view of the exercise treadmill, wherein an inclination angle (A) is formed between a bottom of the main frame and a floor (B).

### DETAILED DESCRIPTION OF THE PREFERRED EMBODIMENTS

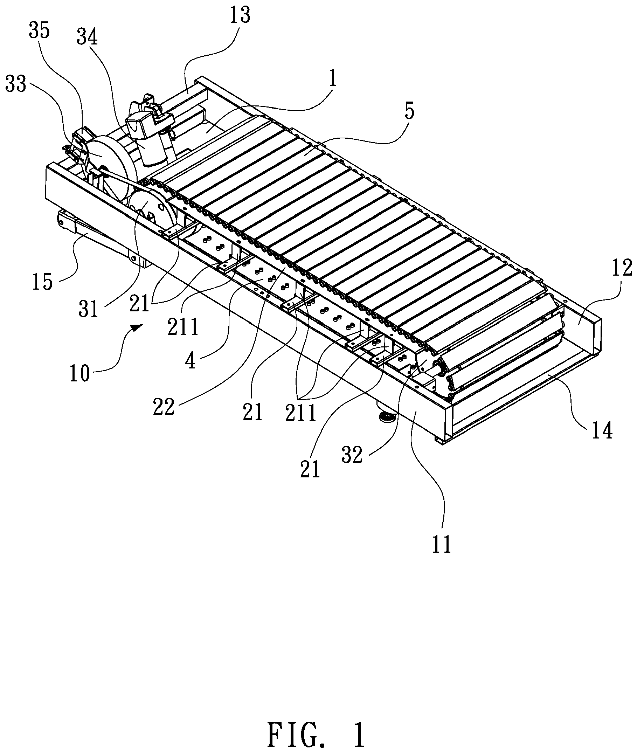

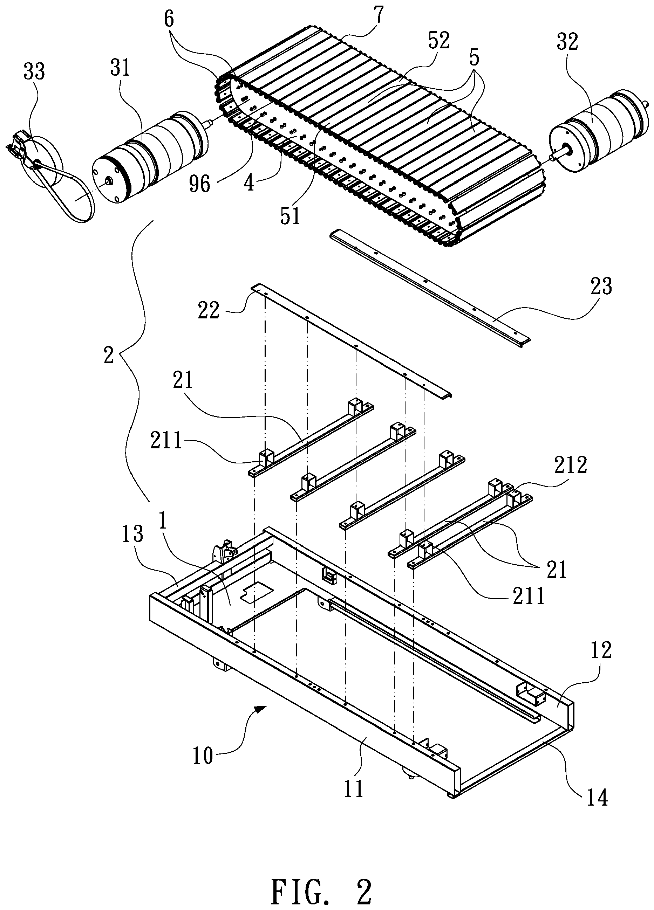

Referring to FIGS. 1 and 2, an exercise treadmill according to one embodiment of the present invention is shown, which comprises a machine body 10, which generally includes an incline motor 34, a flywheel or inertia wheel 33, a brake unit 35, at least two rollers, a support assembly 2 between the two rollers, and a running belt 4 fitted around and engaged with the two rollers and arranged around the support assembly 2. In particular, the exercise treadmill is provided with an accelerating means, by which, while a user is walking or running on the machine body 10, the treading force provided by the user enables the running belt 4 to be accelerated for generating electrical power.

The running belt 4 is provided on its outer surface with a plurality of elongated aluminum plates 5, which allow a user to tread thereon to facilitate the running belt 4 to move around the two rollers for generating electrical power.

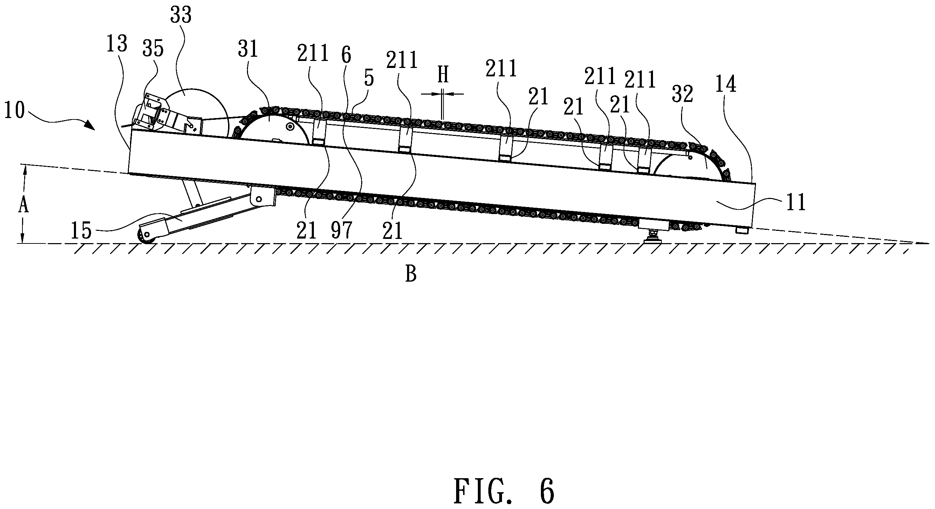

The machine body 10 generally includes a main frame 1 and a base frame 15. The main frame 1 has a left side member 11, a right side member 12, a front side member 13, and a rear side member 14. The two rollers include a front roller 31 and a rear roller 32. In this embodiment, the flywheel 33 is linked with the front roller 31. The front roller 31 is mounted close to the front side member 13 of the main frame 1. The rear roller 32 is mounted close to the rear side member 14 of the main frame 1. The base frame 15, which is generally mounted under the front side member 13 of the main frame 1, can be driven by the incline motor 34 to cause a pivotal movement of the main frame 1, so that an inclination angle (A), greater than zero degree, is formed between a bottom of the main frame 1 and a floor (B) on which the machine body 10 rests (see FIG 6).

The support assembly 2 includes a plurality of transverse bars 21, a left rail 22, and a right rail 23. The transverse bars 21 are fixed onto the left and right side members 11, 12 of the main frame 1. Each of the transverse bars 21 is provided with a left positioning seat 211 and a right positioning seat 212 respectively at its two opposite ends. The left rail 22 is mounted onto the transverse bars 21 through the left positioning seats 211, while the right rail 23 is mounted onto the transverse bars 21 through the right positioning seats 212. Since the running belt 4 is engaged with the two rollers 31, 32, while a user is walking or running on the elongated aluminum plates 5 provided on the running belt 4, the front and rear rollers 31, 32 can be driven into rotation, which in turn drives the flywheel 33 to rotate so as to generate electrical power. When the speed of the flywheel 33 is too fast, the brake unit 35 may increase motion resistance on the flywheel 33, so that the speed of the flywheel 33 can be reduced, thus preventing a user from a possible danger in a training activity. On the other hand, when the speed of the flywheel 33 is too low, the brake unit 35 may decrease motion resistance on the flywheel 33, so that the speed of the flywheel 33 can be increased.

The brake unit 35 may use an electromagnet to control the speed of the flywheel 33.

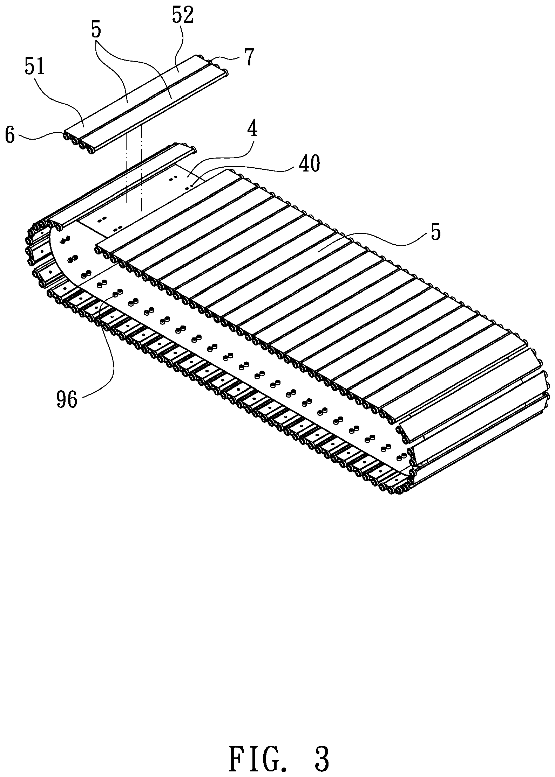

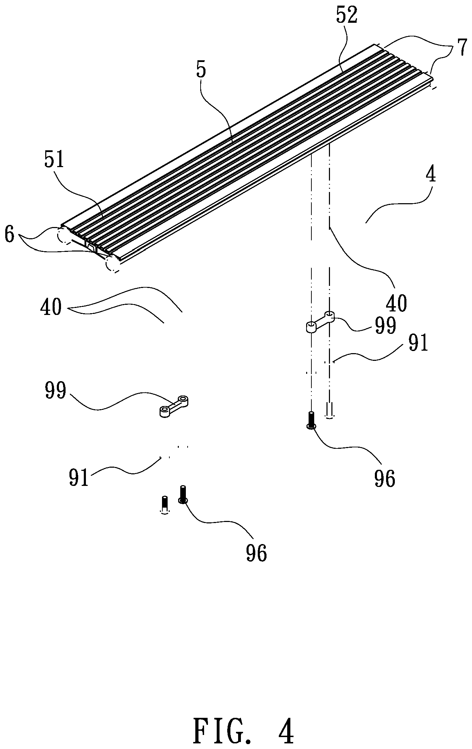

Referring to FIGS. 3 and 4, each of the elongated aluminum plates 5 is provided with alternate raised and recessed portions on its outer surface to increase the friction between the elongated aluminum plates 5 and the soles of a user. The running belt 4 defines a plurality of through holes 40 in pairs. Each of the elongated aluminum plates 5 is fixed onto the running belt 4 by using a plurality of fasteners 96 sequentially inserted through washers 91, spacers 99, and the through holes 40 of the running belt 4 into the corresponding elongated aluminum plate 5, wherein each of the spacers 99 defines two holes corresponding to one pair of the through holes 40 of the running belt 4. For the running belt 4, there is a gap (H), greater than zero, between every two adjacent elongated aluminum plates 5 to prevent the elongated aluminum plates 5 from being interfered with each other while the running belt 4 is driven to move around the two rollers 31, 32 (see FIG 6), so that the exercise treadmill can be operated more smoothly.

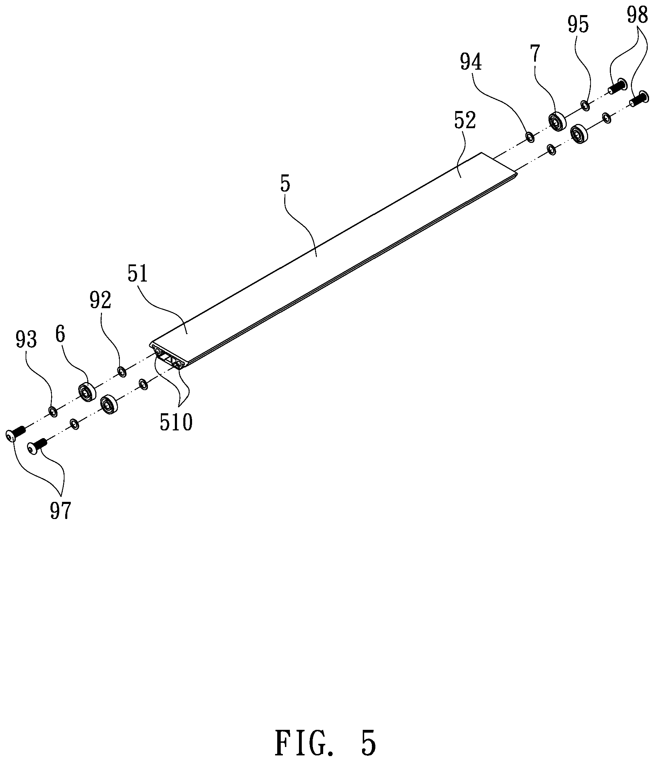

Referring to FIG 5, each of the elongated aluminum plates 5 is installed at its left end 51 with two small roller 6, and installed at its right end 52 with two small roller 7, wherein the small rollers 6, 7 can be made in the form of a bearing to achieve the rolling function. Each of the elongated aluminum plates 5 defines two engagement holes 510 at its left end 51. For installing the two small roller 6, two fasteners 97 are sequentially inserted two first washers 93, the two small roller 6, and two second washers 92 to be engaged with the two engagement holes 510 of the elongated aluminum plate 5. Similarly, for installing the two small roller 7, two fasteners 98 are sequentially inserted through two first washers 95, the two small roller 7, and two second washers 94 into the right end 52 of the elongated aluminum plates. As such, the small roller 6, 7 can be placed in rolling contact with the left and right rails 22, 23 of the support assembly 2, respectively, so that the friction between the elongated aluminum plates 5 and the two rails of the support assembly 2 can be reduced. The accelerating means mentioned previously can be achieved by using the small roller 6, 7 in rolling contact with the left rail 22 and the left rail 23 of the support assembly 2.

In use, while a user is walking or running on the running belt 4 overlaid with the elongated aluminum plates 5, due to the small roller 6, 7 installed at the elongated aluminum plates 5 being in rolling contact with the left and right rails 22, 23 of the support assembly 2, the friction between the elongated aluminum plates 5 and the rails 22, 23 can be significantly reduced. Thus, the running belt 4 can be accelerated to move around the front and rear rollers 31, 32 more easily. Furthermore, due to the inclination angle (A) between the bottom of the main frame 1 and the floor (B), while a user is walking or running on the treadmill, the user's weight can be applied to the running belt 4 to facilitate the running belt 4 moving around the front and rear rollers 31, 32, so that the flywheel 33 can be rotated more easily to generate electrical power, and the user can exercise on the treadmill, such as walking or running, more easily.

As a summary, the present invention provides a machine body of an exercise treadmill, which includes at least two rollers, a flywheel 33 linked with the two rollers, a support assembly 2 between the two rollers, and a running belt 4 fitted around and engaged with the two rollers and arranged around the support assembly 2. The running belt 4 is provided a plurality of elongated aluminum plates on its outer surface. While a user is walking or running on the machine body, the treading force provided by the user allows the running belt 4 to be accelerated to move around the two rollers to generate electrical power. In addition to improving body health, the electrical power produced by the treadmill in the training activity can reduce the electrical consumption of city power.

## Claims

1. An exercise treadmill including a machine body (10) which has at least two rollers, a flywheel (33) linked with one of the two rollers, a support assembly (2) mounted between the two rollers, and a running belt (4) fitted around and engaged with the two rollers and arranged around the support assembly (2);
wherein the treadmill
is provided with an accelerating means so that, while a user is walking or running on the machine body (10), the treading force provided by the user allows the running belt (4) to be accelerated to move around the two rollers for generating electrical power, wherein the machine body (10) includes a main frame (1) having a left side member (11), a right side member (12), a front side member (13) and a rear side member (14), the two rollers including a front roller (31) mounted close to the front side member (13) of the main frame (1) and a rear roller (32) mounted close to the rear side member (14) of the main frame (1), the flywheel (33) being linked with the front roller (31), wherein the support assembly (2) includes a plurality of transverse bars (21) being fixed onto the left and right side members (11, 12) of the main frame (1) at their opposite ends
**characterised in that**
the machine body (10) further includes a base frame (15), wherein the base frame (15) is mounted under the front side member (13) of the main frame (1) and is capable of being driven by an incline motor (34) to form an inclination angle (A) between a bottom of the main frame (1) and the floor (B),
the running belt (4) is provided on its outer surface with a plurality of elongated aluminum plates (5), which allows a user to tread thereon to facilitate the running belt (4) moving around the two rollers for generating electrical power,
the support assembly (2) further includes a left rail (22) and a right rail (23), each of the transverse bars (21) being provided with a left positioning seat (211) and a right positioning seat (212) respectively at its two opposite ends, the left rail (22) being mounted onto the transverse bars (21) through the left positioning seats (211), the right rail (23) being mounted onto the transverse bars (21) through the right positioning seats (212), whereby while a user is walking or running on the elongated aluminum plates (5) provided on the running belt (4), the front and rear rollers (31, 32) are driven into rotation, which in turn drives the flywheel (33) linked with the front wheel (31) to rotate so as to generate electrical power,
and **in that** each of the elongated aluminum plates (5) is installed at each of its two opposite ends with two small rollers, which are in rolling contact with one of the left and right rails (22,23) of the support assembly (2), so as to reduce the friction between the elongated aluminum plates (5) and the left and right rails (22)(23), the accelerating means including the small rollers (6, 7) installed at the elongated aluminum plates (5) and the left and right rails (22, 23) of the support assembly (2).

2. The exercise treadmill of claim 1, wherein the running belt (4) defines a plurality of through holes (40) being arranged in pairs; each of the elongated aluminum plates (5) is provided with alternate raised and recessed portions on its outer surface to increase its friction, and each of the elongated aluminum plates (5) is fixed onto the running belt (4) by using fasteners (96) sequentially inserted through washers (91), spacers (99), and the through holes (40) of the running belt (4) into the corresponding elongated aluminum plate, wherein each of the spacers (99) defines two holes corresponding to one pair of the through holes (40) of the running belt (4).

3. The exercise treadmill of claim 2, wherein every two adjacent elongated aluminum plates (5) defines a gap (H) therebetween to prevent the elongated aluminum plates (5) from being interfered with each other, so that the exercise treadmill can be operated more smoothly.

4. The exercise treadmill of claim 1, wherein each of the elongated aluminum plates (5) defines at least one engagement hole at each of its two opposite ends, a fastener being sequentially inserted through a first washer, the small roller, and a second washer to be engaged with the engagement hole of the elongated aluminum plate, so that the small roller (6, 7) are installed to the elongated aluminum plates (5).

5. The exercise treadmill of claim 4, wherein the small rollers (6, 7) are made in the form of a bearing.

## Patentansprüche

1. Trainingslaufband, welches einen Maschinenkörper (10), der wenigstens zwei Rollen hat, ein Schwungrad (33), das mit einer der beiden Rollen gekoppelt ist, eine Trägeranordnung (2), die zwischen den beiden Rollen montiert ist, und einen Laufgurt (4) beinhaltet, der um die beiden Rollen herum angebracht ist und mit diesen in Eingriff steht und um die Trägeranordnung (2) angeordnet ist, wobei das Laufband
mit einem Beschleunigungsmittel versehen ist, sodass, während ein Benutzer auf dem Maschinenkörper (10) geht oder läuft, die durch den Benutzer bereitgestellte Trittkraft ermöglicht, dass der Laufgurt (4) beschleunigt wird, um sich zur Erzeugung von elektrischer Energie um die beiden Rollen zu bewegen, wobei der Maschinenkörper (10) einen Hauptrahmen (1) mit einem linken Seitenelement (11), einem rechten Seitenelement (12), einem Vorderseitenelement (13) und einem Rückseitenelement (14) umfasst, wobei die beiden Rollen eine vordere Rolle (31), die nahe an dem Vorderseitenelement (13) des Hauptrahmens (1) angebracht ist, und eine hintere Rolle (32) beinhalten, die nahe an dem Rückseitenelement (14) des Hauptrahmens (1) angebracht ist, wobei das Schwungrad (33) mit der vorderen Rolle (31) gekoppelt ist, wobei die Trägeranordnung (2) eine Vielzahl von Querbalken (21) umfasst, die mit ihren entgegengesetzten Enden an dem linken und rechten Seitenelement (11, 12) des Hauptrahmens (1) fixiert sind, **dadurch gekennzeichnet, dass**
der Maschinenkörper (10) ferner einen Unterbaurahmen (15) umfasst, wobei der Unterbaurahmen (15) unter dem Vorderseitenelement (13) des Hauptrahmens (1) montiert ist und durch einen Steigungsmotor (34) angetrieben werden kann, um einen Neigungswinkel (A) zwischen einer Unterseite des Hauptrahmens (1) und dem Boden (B) zu bilden,
der Laufgurt (4) an seiner Außenfläche mit einer Vielzahl von länglichen Aluminiumplatten (5) versehen ist, was ermöglicht, dass ein Benutzer darauf treten kann, um dem Laufgurt (4) eine Bewegung um die beiden Rollen zur Erzeugung von elektrischer Energie zu erleichtern,
die Trägeranordnung (2) ferner eine linke Schiene (22) und eine rechte Schiene (23) umfasst, wobei jeder der Querbalken (21) an seinen beiden entgegengesetzten Enden entsprechend mit einem linken Positioniersitz (211) und einem rechten Positioniersitz (212) ausgebildet ist, wobei die linke Schiene (22) durch die linken Positioniersitze (211) auf den Querbalken (21) montiert ist, wobei die rechte Schiene (23) durch die rechten Positioniersitze (212) auf den Querbalken (21) montiert ist, wobei, während ein Benutzer auf den am Laufgurt (4) bereitgestellten länglichen Aluminiumplatten (5) geht oder läuft, die vordere und hintere Rolle (31, 32) zur Drehung angetrieben werden, wodurch wiederum das mit der vorderen Rolle (31) gekoppelte Schwungrad (33) zum Drehen gebracht wird, sodass elektrische Energie erzeugt wird,
und wobei jede der länglichen Aluminiumplatten (5) an jeder von ihren beiden entgegengesetzten Enden mit zwei kleinen Rollen ausgestattet ist, welche in Rollkontakt mit einer der linken und rechten Schiene (22, 23) der Trägeranordnung (2) stehen, sodass die Reibung zwischen den länglichen Aluminiumplatten (5) und der linken und rechten Schiene (22)(23) verringert wird, wobei das Beschleunigungsmittel die kleinen Rollen (6, 7), die an den länglichen Aluminiumplatten (5) angeordnet sind, und die linke und rechte Schiene (22, 23) der Trägeranordnung (2) beinhaltet.

2. Trainingslaufband nach Anspruch 1, bei welchem der Laufgurt (4) eine Vielzahl von Durchgangsiöchem (40) aufweist, die paarweise angeordnet sind, wobei jede der länglichen Aluminiumplatten (5) an ihrer Außenfläche mit sich abwechselnden erhöhten und vertieften Abschnitten zur Vergrößerung der Reibung versehen ist, und wobei jede der länglichen Aluminiumplatten (5) durch die Verwendung von Befestigungselementen (96), die der Reihe nach durch Distanzscheiben (91), Abstandshalter (99) und die Durchgangslöcher (40) des Laufgurts (4) in die korrespondierende längliche Aluminiumplatte gesteckt sind, an dem Laufgurt (4) befestigt ist, wobei jeder der Abstandshalter (99) zwei Löcher aufweist, die mit einem Paar der Durchgangslöcher (40) des Laufgurts (4) korrespondieren.

3. Trainingslaufband nach Anspruch 2, bei welchem jeweils zwei benachbarte längliche Aluminiumplatten (5) einen Spalt (H) dazwischen definieren, um zu verhindern, dass die länglichen Aluminiumplatten (5) sich gegenseitig überlagem, sodass das Trainingslaufband reibungsloser betätigt werden kann.

4. Trainingslaufband nach Anspruch 1, bei welchem jede der länglichen Aluminiumplatten (5) wenigstens ein Eingriffsloch an jeder ihrer beiden gegenüberliegenden Enden aufweist, wobei ein Befestigungselement nacheinander durch eine erste Distanzscheibe, die kleine Rolle und eine zweite Distanzscheibe hindurchgeführt ist, um mit dem Eingriffsloch der länglichen Aluminiumplatte in Eingriff gebracht zu werden, wodurch die kleinen Rollen (6, 7) an den länglichen AJuminiumplatten (5) montiert sind.

5. Trainingslaufband nach Anspruch 4, bei welchem die kleinen Rollen (6, 7) in der Form eines Lagers ausgebildet sind.

## Revendications

1. Tapis de course d'exercice incluant un corps de machine (10) qui présente au moins deux rouleaux, un volant d'inertie (33) relié à un des deux rouleaux, un ensemble de support (2) monté entre les deux rouleaux, et une courroie de course (4) ajustée autour et engagée avec les deux rouleaux et agencée autour de l'ensemble de support (2); dans lequel le tapis de course
est pourvu d'un moyen d'accélération de sorte que, tandis qu'un utilisateur marche ou court sur le corps de machine (10), la force de marche fournie par l'utilisateur permet à la courroie de course (4) d'être accélérée pour bouger autour des deux rouleaux pour générer de l'alimentation électrique, dans lequel le corps de machine (10) inclut une structure principale (1) présentant un élément de côté gauche (11), un élément de côté droit (12), un élément de côté avant (13) et un élément de côté arrière (14), les deux rouleaux incluant un rouleau avant (31) monté proche de l'élément de côté avant (13) de la structure principale (1) et un rouleau arrière (32) monté proche de l'élément de côté arrière (14) de la structure principale (1), le volant d'inertie (33) étant relié au rouleau avant (31), dans lequel l'ensemble de support (2) inclut une pluralité de barres transversales (21) étant fixées sur les éléments de côté gauche et droit (11, 12) de la structure principale (1) au niveau de leurs extrémités opposées
**caractérisé en ce que**
le corps de machine (10) inclut en outre une structure de base (15), dans lequel la structure de base (15) est montée sous l'élément de côté avant (13) de la structure principale (1) et est capable d'être entraînée par un moteur incliné (34) pour former un angle d'inclinaison (A) entre une partie inférieure de la structure principale (1) et le sol (B),
la courroie de course (4) est pourvue, sur sa surface extérieure, d'une pluralité de plaques en aluminium allongées (5), ce qui permet à un utilisateur de marcher sur celles-ci pour faciliter le mouvement de la courroie de course (4) autour des deux rouleaux pour générer de l'alimentation électrique,
l'ensemble de support (2) inclut en outre un rail gauche (22) et un rail droit (23), chacune des barres transversales (21) étant pourvue d'un siège de positionnement gauche (211) et d'un siège de positionnement droit (212) respectivement au niveau de ses deux extrémités opposées, le rail gauche (22) étant monté sur les barres transversales (21) à travers les sièges de positionnement gauches (211), le rail droit (23) étant monté sur les barres transversales (21) à travers les sièges de positionnement droits (212), selon lequel tandis qu'un utilisateur marche ou court sur les plaques en aluminium allongées (5) fournies sur la courroie de course (4), les rouleaux avant et arrière (31, 32) sont entraînés en rotation, ce qui à son tour amène le volant d'inertie (33) relié à la roue avant (31) à pivoter de manière à générer de l'alimentation électrique,
et **en ce que** chacune des plaques en aluminium allongées (5) est installée au niveau de chacune de ses deux extrémités opposées avec deux petits rouleaux, qui sont en contact de roulement avec un des rails gauche et droit (22, 23) de l'ensemble de support (2), de manière à réduire le frottement entre les plaques en aluminium allongées (5) et les rails gauche et droit (22) (23), le moyen d'accélération incluant les petits rouleaux (6, 7) installés au niveau des plaques en aluminium allongées (5) et les rails gauche et droit (22, 23) de l'ensemble de support (2).

2. Tapis de course d'exercice selon la revendication 1, dans lequel la courroie de course (4) définit une pluralité de trous traversants (40) étant agencés en paires; chacune des plaques en aluminium allongées (5) est pourvue de portions surélevées et enfoncées en alternance sur sa surface extérieure pour augmenter son frottement, et chacune des plaques en aluminium allongées (5) est fixée sur la courroie de course (4) en utilisant des fixations (96) insérées séquentiellement à travers des joints (91), des boulons d'espacement (99), et les trous traversants (40) de la courroie de course (4) dans la plaque en aluminium allongée correspondante, dans lequel chacun des boulons d'espacement (99) définit deux trous correspondant à une paire des trous traversants (40) de la courroie de course (4).

3. Tapis de course d'exercice selon la revendication 2, dans lequel toutes les deux plaques en aluminium allongées adjacentes (5) définissent un écart (H) entre celles-ci pour empêcher les plaques en aluminium allongées (5) d'interférer les unes avec les autres, de sorte que le tapis de course d'exercice puisse fonctionner plus doucement.

4. Tapis de course d'exercice selon la revendication 1, dans lequel chacune des plaques en aluminium allongées (5) définit au moins un trou d'engagement au niveau de chacune de ses deux extrémités opposées, une fixation étant séquentiellement insérée à travers un premier joint, le petit rouleau, et un second joint pour être engagée avec le trou d'engagement de la plaque en aluminium allongée, de sorte que le petit rouleau (6, 7) sont installés sur les plaques en aluminium allongées (5).

5. Tapis de course d'exercice selon la revendication 4, dans lequel les petits rouleaux (6, 7) sont faits sous la forme d'un palier.
